Europäisches Patentamt

European Patent Office

Office européen des brevets

(11) Veröffentlichungsnummer: **0 367 051**

**A1**

(12) **EUROPÄISCHE PATENTANMELDUNG**

(21) Anmeldenummer: 89119549.7

(22) Anmeldetag: 21.10.89

(51) Int. Cl.5: **C08G 18/83 , C08G 18/08 , C09D 11/10**

Patentansprüche für folgenden Vertragsstaat: ES.

(30) Priorität: 04.11.88 DE 3837519

(43) Veröffentlichungstag der Anmeldung:
**09.05.90 Patentblatt 90/19**

(84) Benannte Vertragsstaaten:
**AT BE CH DE ES FR GB IT LI NL SE**

(71) Anmelder: **BASF Lacke + Farben**
**Aktiengesellschaft**
**Max-Winkelmann-Strasse 80**
**D-4400 Münster(DE)**

(72) Erfinder: **Meichsner, Georg, Dr.**
**An der Sandbeune 36**
**D-6840 Lampertheim(DE)**
Erfinder: **Blum, Rainer**
**Bannwasserstrasse 58**
**D-6700 Ludwigshafen(DE)**

(74) Vertreter: **Welzel, Gunther, Dr. et al**
**c/o BASF Aktiengesellschaft**
**Carl-Bosch-Strasse 38**
**D-6700 Ludwigshafen(DE)**

(54) **Lagerstabile vernetzbare wässrige Polyurethandispersionen.**

(57) Die vorliegende Erfindung betrifft lagerstabile vernetzbare wäßrige Polyurethan-Dispersionen, enthaltend

A) in Gegenwart von Ammoniak oder organischen Aminen in Wasser dispergierte Polyurethane mit Carbonylgruppen, erhältlich durch Umsetzung von

a) organischen Polyisocyanaten mit

b) Verbindungen, die mindestens ein aktives Wasserstoffatom und mindestens eine Salzgruppe oder eine zur Salzbildung befähigte Gruppe enthalten und

c) Carbonylgruppen enthaltenden Mono- und/oder Polyalkoholen und

d) gegebenenfalls Kettenverlängerern und

e) gegebenenfalls Polyhydroxylverbindungen mit Molekulargewichten von 500 bis 8000 und

B) Polyhydrazide.

## Lagerstabile vernetzbare wäßrige Polyurethandispersionen

Die vorliegende Erfindung betrifft lagerstabile vernetzbare wäßrige Polyurethandispersionen, enthaltend Polyurethane mit Carbonylgruppen und Polyhydrazide sowie deren Verwendung zur Herstellung von Druckfarben.

Vernetzbare bzw. selbstvernetzende Bindemittel-Systeme für wasserverdünnbare Lacke und Druckfarben werden heute entweder als Einkomponenten- oder als Zweikomponenten-Systeme angeboten. Zweikomponenten-Systeme haben aufgrund ihrer Reaktivität oft nur eine begrenzte Lagerstabilität, da entweder die Vernetzungsreaktion langsam fortschreitet, oder der Vernetzer mit Wasser abreagiert. Einkomponenten-Systeme haben dagegen oft eine lange Trocknungs- bzw. Härtungszeit. Ein anderes Problem ist oft eine schlechte Beständigkeit der Lackfilme gegen Alkalien oder Säuren, da die Emulgatoren oder die ins Harz eingebauten Löslichkeitsvermittler wie Carboxylatgruppen, Sulfonatgruppen oder Ammoniumgruppen die Wiederanlösbarkeit des Lackfilms ermöglichen.

Eine Möglichkeit, ein wasserlösliches Harz in kurzer Zeit zu vernetzen, besteht z.B. in der Zugabe von Salzen mit mehrwertigen Kationen, was in der EP 0 194 687 oder der US-3,320,196 beschrieben ist. Nach Verdunsten des Wassers bilden die Carboxylgruppen des Bindemittels Salze mit den polyvalenten Kationen, jedoch entstehen hierbei meist keine alkalibeständigen Filme.

Alkali- und detergentienbeständige Filme können erhalten werden, wenn das löslichkeitsvermittelnde Zentrum im Bindemittel an der Vernetzungsreaktion beteiligt ist und abreagiert. Dies wurde am Beispiel der Vernetzung mit Polyaziridinen gezeigt, was in der EP 0 196 164 beschrieben ist.

Die Vernetzung von carbonylgruppenhaltigen Acrylatdispersionen durch Bishydrazide ist in der DE-OS 35 36 261 beschrieben und verläuft sehr schnell. Acrylate haben allerdings den Nachteil der schlechten Filmbildung und die Filme haben nur einen geringen Glanz.

Aufgabe der vorliegenden Erfindung war es, eine selbstvernetzende Bindemittelzubereitung auf Wasserbasis zu entwickeln, die besonders für Druckfarben für die Lebensmittelverpackung geeignet ist. Filme aus diesen Lacken sollen schnell klebfrei werden, gute Haftung auf Untergründen wie Glas, Aluminiumfolie, organischen Folien wie Polyethylen-, Polypropylen-, Polyester- oder Polyimid-Folien, sowie auf unbeschichteten und Polyethylen- bzw. Polypropylen-beschichtetem Karton oder Papier zeigen.

Gelöst wurde die Aufgabe durch eine Kombination aus einem Polyurethan mit Carbonylgruppen und einem Polyhydrazid, die in wäßrigen Dispersionen lagerstabil sind und nach dem Verdunsten des Wassers vernetzen.

Gegenstand der vorliegenden Erfindung sind lagerstabile vernetzbare wäßrige Polyurethan-Dispersionen, enthaltend

A) in Gegenwart von Ammoniak oder organischen Aminen in Wasser dispergierte Polyurethane mit Carbonylgruppen, erhältlich durch Umsetzung von

a) organischen Polyisocyanaten mit

b) Verbindungen, die mindestens ein aktives Wasserstoffatom und mindestens eine Salzgruppe oder eine zur Salzbildung befähigte Gruppe enthalten und

c) Carbonylgruppen enthaltenden Mono- und/oder Polyalkoholen und

d) gegebenenfalls Kettenverlängerern und

e) gegebenenfalls Polyhydroxylverbindungen mit Molekulargewichten von 500 bis 8000 und

B) Polyhydrazide.

Die Erfindung bezieht sich auch auf die Verwendung dieser Bindemittel zur Herstellung von Druckfarben.

Zu den Aufbaukomponenten ist folgendes auszuführen:

Als organische Polyisocyanate a) eignen sich alle aliphatischen und aromatischen Diisocyanate, wie sie beispielsweise im Kunststoffhandbuch 7 Polyurethane, Carl-Hanser-Verlag 1983, Seite 12 bis 15 und 70 beschrieben sind. Bevorzugt werden Isophorondiisocyanat und Hexamethylendiisocyanat verwendet.

Geeignete Verbindungen b) mit mindestens einem aktiven Wasserstoffatom und mindestens einer Salzgruppe oder einer zur Salzbildung befähigten Gruppe sind bekannt und in der DE-OS 14 95 745 beschrieben. Bevorzugt werden aliphatische und aromatische Mono- und Polycarbonsäuren verwendet, wie beispielsweise Dihydroxycarbonsäuren wie 2,2-Dimethylolpropionsäure, Hydroxycarbonsäure wie Hydroxypivalinsäure oder Hydroxybenzoesäure, Hydroxydicarbonsäuren wie 2-Hydroxybernsteinsäure oder Dihydroxydicarbonsäuren wie Weinsäure oder Mono- und Polyhydroxysulfonsäuren. Besonders bevorzugt werden 2,2-Dimethylolpropionsäure und Weinsäure verwendet.

Durch diese Säuregruppen sind die Polyurethane nach Neutralisation mit Ammoniak oder tert. Aminen in Wasser dispergierbar.

Die Komponente b) wird in einer Menge verwendet, daß die Polyurethane A) eine Säurezahl von 10 bis 100 mg KOH/g, bevorzugt 10 bis 50 mg KOH/g aufweisen.

Geeignete Carbonylgruppen enthaltende Mono- und/oder Polyalkohole C) sind beispielsweise Hydroxyaceton, Hydroxybenzaldehyd, Acetoin und Benzoin.

Weiterhin sind Addukte aus Diepoxiden und Ketocarbonsäuren geeignet. Bevorzugte Diepoxide sind Glycidylether von Bisphenolen wie 2,2-Bis-(4-hydroxyphenyl)-propan (Bisphenol A), 4,4'-Dihydroxybenzophenon, 1,1-Bis-(4-hydroxyphenyl)-ethan, 1,1-Bis-(4-hydroxyphenyl)-isobutan, 2,2-Bis-(4-hydroxy-tert.-butylphenol)-propan, Bis-(4-hydroxynaphthyl)-methan und 1,5-Dihydroxynaphthalin.

Ebenfalls geeignet sind Diglycidylether von zweiwertigen Alkoholen wie von Ethylenglykol, Diethylenglykol, Triethylenglykol, 1,2-Propylenglykol, 1,3-Propandiol, 1,5-Pentandiol, 1,6-Hexandiol und 2,2-Bis-(4-hydroxycyclohexyl)-propan. Es können auch Diglycidylester von Dicarbonsäuren verwendet werden. Bevorzugt werden Oxalsäure, Bernsteinsäure, Glutarsäure, Terephthalsäure, 2,6-Naphthalindicarbonsäure, dimerisierte Linolensäure verwendet. Typische Beispiele sind Glycidyladipat und Glycidylphthalat.

Geeignete Ketocarbonsäuren sind Brenztraubensäure und Lävulinsäure. Bevorzugt wird Lävulinsäure verwendet.

Als Komponente c) sind auch Ketocarbonsäureester geeignet, die durch partielle Veresterung von Ketocarbonsäuren mit Polyalkoholen oder durch partielle Umesterung von Ketocarbonsäureestern mit Polyalkoholen (Partialester) erhältlich sind. Diese Ester haben mindestens noch eine Hydroxylgruppe, bevorzugt aber zwei Hydroxylgruppen. Geeignet sind Partialester wie Brenztraubensäureester, Acetessigester, Lävulinsäureester oder deren Gemische, deren Alkoholkomponente aliphatische Polyalkohole sind wie die Diole Ethylenglykol, Diethylenglykol, Hexandiol-1,6, die Polyole Glycerin, Trimethylolpropan, Trimethylolethan, Pentaerythrit oder Sorbit.

Bevorzugt sind Lävulinsäureester von Triolen mit zwei Hydroxylgruppen.

Geeignet als Komponente c) sind auch Ketocarbonsäureester von Polyesterpolyolen, die mindestens noch eine, bevorzugt zwei Hydroxylgruppen aufweisen. Die Aufbaukomponenten für derartige Polyesterpolyole sind bekannt und im oben zitierten Kunststoff-Handbuch, Seiten 42 bis 61 beschrieben und sind beispielsweise erhältlich durch Veresterung von Bernsteinsäure, Adipinsäure oder Phthalsäure mit Triolen wie Glycerin oder Trimethylolpropan und/oder Diolen wie Butandiol, Hexandiol oder Polytetrahydrofuran mit einem mittleren Molekulargewicht von $\overline{M}_n$ = 1000.

Die Polyesterpolyole haben mittlere Molekulargewichte $\overline{M}_n$ von 400 bis 10.000, bevorzugt 500 bis 8000 und Funktionalitäten von 2 bis 8, bevorzugt 3 bis 4. Durch Umesterung von beispielsweise Brenztraubensäureester, Acetessigester oder Lävulinsäureester mit diesen Polyesterpolyolen sind die als Komponente c) geeigneten Ketocarbonsäureester erhältlich, die noch mindestens eine, bevorzugt zwei Hydroxylgruppen aufweisen. Bevorzugt sind auch hier Lävulinsäureester mit einer Hydroxylfunktionalität von 2.

Selbstverständlich können auch Gemische der Carbonylgruppen enthaltenden Mono- und/oder Polyalkohole als Komponente c) verwendet werden.

Die Komponente c) wird in einer Menge verwendet, daß der Carbonylgehalt des Polyurethans A) 0,1 bis 2,2 Mol CO/1000 g, bevorzugt 0,6 bis 1,5 Mol CO/1000 g beträgt.

Gegebenenfalls können als Komponente d) übliche Kettenverlängerer mitverwendet werden, wie sie beispielsweise im oben zitierten Kunststoff-Handbuch, Seite 18, 99 und 100 beschrieben sind. Bei Mitverwendung sind Butandiol, Hexandiol und Hexamethylendiamin bevorzugt.

Weiterhin können auch Polyhydroxylverbindungen e) mit Molgewichten von 500 bis 8000 mitverwendet werden, wie sie beispielsweise im vorstehend angegebenen Kunststoff-Handbuch, Seite 42 bis 61 beschrieben sind. Bei Mitverwendung sind Polyesterpolyole und Polyetherpolyole bevorzugt.

Die Polyurethane werden nach den bekannten Polyadditionsverfahren hergestellt, indem die Komponenten a) bis c) mit gegebenenfalls e) und f) stufenweise oder im one-shot-Verfahren umgesetzt werden. Dabei werden die Komponenten in solchen Mengen eingesetzt, daß ein Molverhältnis von Isocyanatgruppen zu aktiven Wasserstoffatomen von 1:0,8 bis 1,2, bevorzugt 1:0,9 bis 1,1 resultiert. Die Polyurethane können auch Harnstoffgruppen enthalten, wenn entweder primäre oder sekundäre Amine mitverwendet werden oder wenn mit einem NCO-Überschuß gearbeitet wird und anschließend in Wasser dispergiert wird.

Die Polyurethane werden in Gegenwart von Ammoniak oder organischen Aminen wie Trialkylamin wie Trimethylamin, Triethylamin oder Hydroxyalkylaminen wie Trishydroxyethylamin oder Gemischen dieser Amine in Wasser dispergiert. Dabei kann das Amin dem Polyurethan oder dem Wasser vor oder während der Dispergierung zugesetzt werden. Die wäßrigen Dispersionen werden mit Polyhydraziden von organischen Dicarbonsäuren versetzt, so daß ein Äquivalentverhältnis von Carbonylgruppen der Polyurethane A) zu Polyhydraziden B) von 0,1 bis 1,1:1, bevorzugt 0,5 bis 1,1:1 resultiert.

Die Polyhydrazide sind bekannt und beispielsweise in der DE-OS 35 36 261 beschrieben. Bevorzugt werden Adipinsäurebishydrazid, Bernsteinsäurebishydrazid und Phthalsäurebishydrazid verwendet.

Den wäßrigen Dispersionen können noch übliche Pigmente, Hilfsmittel wie Wachse, Gleitmittel und Pigmentdispergierhilfsmittel und/oder Zusatzstoffe wie Verdickungsmittel, Thixotropierungsmittel und Entschäumer zugesetzt werden.

Nach dem Auftragen der wäßrigen Dispersionen auf Substrate aus Glas, Aluminiumfolie, organischen Folien wie Polyethylen-, Polypropylen-, Polyester- oder Polyimidfolien, sowie auf unbeschichtetem und Polyethylen- bzw. Polypropylenbeschichtetem Karton oder Papier bilden sich schnell abtrocknende Filme, die sofort vernetzen. Sie weisen einen guten Glanz, eine gute Säure-, Alkali- und Detergentienbeständigkeit auf sowie eine hervorragende Haftung auf Folien und eine gute Abriebbeständigkeit.

Beispiel

Herstellung einer Polyurethandispersion

In einem 2 l-Reaktor wurden unter Stickstoffatmosphäre bei 80 bis 120°C unter Rühren 150,3 g (0,677 mol) Isophorondiisocyanat zu einer Mischung aus 200 g (0,436 val) eines CO-funktionalisierten Polyesters, 112,4 g (0,186 mol) eines Adduktes aus 2 mol Lävulinsäure und 1 mol Bisphenol-A-diglycidylether, 7,4 g (0,100 mol) Hydroxyaceton, 29,86 g (0,223 mol) Dimethylolpropionsäure und 22,5 g Triethylamin getropft. Sobald der NCO-Gehalt von weniger als 1 Gew.% NCO/1000 g erreicht war, wurde Wasser zugegeben.

Herstellung eines Klarlacks

Die oben beschriebene Polyurethandispersion wurde mit 60,0 g (0,345 mol) Adipinsäurebishydrazid versetzt und mit Wasser solange verdünnt, bis eine Viskosität von 30 sec Auslaufzeit im 4 mm-Fordbecher erreicht wurde.

Herstellung einer Druckfarbe

Der oben beschriebene Klarlack wurde mit 500 g Blau-Pigment und 5 g Polyethylenwachs versetzt und nach intensivem Dispergieren mit Wasser auf eine Auslaufzeit von 14 sec im 4 mm-Fordbecher verdünnt.

Drucke aus den so hergestellten Druckfarben waren auf Polyethylenfolie nach DIN 16 524 gegen Säuren und Alkalien beständig.

**Ansprüche**

1. Lagerstabile vernetzbare wäßrige Polyurethan-Dispersionen, enthaltend

A) in Gegenwart von Ammoniak oder organischen Aminen in Wasser dispergierte Polyurethane mit Carbonylgruppen, erhältlich durch Umsetzung von

a) organischen Polyisocyanaten mit

b) Verbindungen, die mindestens ein aktives Wasserstoffatom und mindestens eine Salzgruppe oder eine zur Salzbildung befähigte Gruppe enthalten und

c) Carbonylgruppen enthaltenden Mono- und/oder Polyalkoholen und

d) gegebenenfalls Kettenverlängerern und

e) gegebenenfalls Polyhydroxylverbindungen mit Molekulargewichten von 500 bis 8000 und

B) Polyhydrazide.

2. Dispersionen nach Anspruch 1, enthaltend Polyurethane, erhältlich unter Verwendung von Mono- oder Dihydroxycarbonsäuren, Hydroxydicarbonsäuren, Mono- oder Dihydroxysulfonsäuren oder deren Gemische als Komponente b).

3. Dispersionen nach einem der Ansprüche 1 bis 2, enthaltend Polyurethane, erhältlich unter Verwendung von Hydroxyaceton, Hydroxybenzaldehyd, Acetoin, Benzoin oder deren Gemische als Komponente c).

4. Dispersionen nach einem der Ansprüche 1 bis 3, enthaltend Polyurethane, erhältlich unter Verwendung von Umsetzungsprodukten aus Diepoxiden und Ketocarbonsäuren und/oder Ketocarbonsäureestern von Trialkoholen und/oder Ketocarbonsäureestern von Polyesterpolyolen als Komponente c).

5. Dispersionen nach einem der Ansprüche 1 bis 4, enthaltend Bishydrazide von organischen Dicarbonsäuren als Komponente B).

6. Dispersionen nach einem der Ansprüche 1 bis 5, enthaltend Polyurethane A) und Polyhydrazide B) in einem Äquivalenzverhältnis von Carbonylgruppen der Polyurethane A) zu Polyhydraziden B) von 0,1 bis 1:1.

7. Dispersionen nach einem der Ansprüche 1 bis 6, enthaltend zusätzlich Pigmente, Hilfs- und/oder Zusatzstoffe.

8. Verfahren zur Herstellung von Dispersionen gemäß einem der Ansprüche 1 bis 7, dadurch gekennzeichnet, daß man

a) organische Polyisocyanate mit

b) Verbindungen, die mindestens ein aktives Wasserstoffatom und mindestens eine Salzgruppe oder eine zur Salzbildung befähigte Gruppe enthalten und

c) Carbonylgruppen enthaltenden Mono- und/oder Polyalkoholen und

d) gegebenenfalls Kettenverlängerern und

e) gegebenenfalls Polyhydroxylverbindungen mit Molekulargewichten von 500 bis 8000
in einem Molverhältnis von Isocyanatgruppen zu aktiven Wasserstoffatomen von 1:0,8 bis 1,2 umsetzt, in Gegenwart von Ammoniak oder organischen Aminen in Wasser dispergiert und zu dieser Dispersion Polyhydrazide gibt.

9. Verwendung der Dispersionen gemäß einem der Ansprüche 1 bis 7 zur Herstellung von Druckfarben.

10. Druckfarben erhältlich unter Verwendung der Dispersionen gemäß einem der Ansprüche 1 bis 7.

Patentansprüche für folgenden Vertragsstaat: ES

1. Verfahren zur Herstellung von lagerstabilen, vernetzbaren wäßrigen Polyurethan Dispersionen, dadurch gekennzeichnet, daß man
a) organische Polyisocyanate mit
b) Verbindungen, die mindestens ein aktives Wasserstoffatom und mindestens eine Salzgruppe oder eine zur Salzbildung befähigte Gruppe enthalten und
c) Carbonylgruppen enthaltenden Mono- und/oder Polyalkoholen und
d) gegebenenfalls Kettenverlängerern und
e) gegebenenfalls Polyhydroxylverbindungen mit Molekulargewichten von 500 bis 8000
in einem Molverhältnis von Isocyanatgruppen zu aktiven Wasserstoffatomen von 1:0,8 bis 1,2 umsetzt, in Gegenwart von Ammoniak oder organischen Aminen in Wasser dispergiert und zu dieser Dispersion Polyhdrazide gibt.

2. Verfahren nach Anspruch 1, dadurch gekennzeichnet, daß als Komponente b) Mono- oder Dihydroxycarbonsäuren, Hydroxydicarbonsäuren, Mono- oder Dihydroxysulfonsäuren oder deren Gemische verwendet werden.

3. Verfahren nach mindestens einem der Ansprüche 1 bis 2, dadurch gekennzeichnet, daß als Komponente c) Hydroxyaceton, Hydroxybenzaldehyd, Acetoin, Benzoin oder deren Gemische eingesetzt werden.

4. Verfahren nach mindestens einem der Ansprüche 1 bis 2, dadurch gekennzeichnet, daß Umsetzungsprodukte aus Diepoxiden und Ketocarbonsäuren und/oder Ketocarbonsäureestern von Trialkoholen und/oder Ketocarbonsäureestern von Polyesterpolyolen als Komponente c) eingesetzt werden.

5. Verfahren nach mindestens einem der Ansprüche 1 bis 4, dadurch gekennzeichnet, daß als Polyhydrazide B) Bishydrazide von organischen Dicarbonsäuren eingesetzt werden.

6. Verfahren nach mindestens einem der Ansprüche 1 bis 5, dadurch gekennzeichnet, daß das Äquivalenzverhältnis der Carbonylgruppen der aus a), b), c) und gegebenenfalls d) und e) erhaltenen Polyurethane zu den Polyhydraziden 0,1 bis 1:1 beträgt.

7. Verfahren nach mindestens einem der Ansprüche 1 bis 6, wobei zusätzlich Pigmente, Hilfs- oder Zusatzstoffe eingesetzt werden.

8. Verwendung der gemäß einem der Ansprüche 1 bis 7 erhaltenen Dispersionen zur Herstellung von Druckfarben.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| E | EP-A-0 332 326 (I.C.I. RESINS)<br>* Claims 1-4,16-18; exemple 1 *<br>--- | 1-8 | C 08 G 18/83<br>C 08 G 18/08<br>C 09 D 11/10 |
| A | GB-A-2 107 338 (WITCO CHEMICAL CORP.)<br>--- | | |
| A | GB-A-1 353 413 (BAYER)<br>----- | | |

**RECHERCHIERTE SACHGEBIETE (Int. Cl.5)**

C 08 G
C 09 D

Der vorliegende Recherchenbericht wurde für alle Patentansprüche erstellt

| Recherchenort | Abschlußdatum der Recherche | Prüfer |
|---|---|---|
| DEN HAAG | 07-02-1990 | VAN PUYMBROECK M.A. |